(19) **Europäisches Patentamt / European Patent Office / Office européen des brevets**

(11) **EP 3 754 898 B1**

(12) **EUROPEAN PATENT SPECIFICATION**

(45) Date of publication and mention of the grant of the patent:
**26.07.2023 Bulletin 2023/30**

(21) Application number: **19020392.7**

(22) Date of filing: **19.06.2019**

(51) International Patent Classification (IPC):
**H04L 9/00** *(2022.01)*      **H04L 9/32** *(2006.01)*

(52) Cooperative Patent Classification (CPC):
**H04L 9/50; H04L 9/3218;** H04L 2209/46;
H04L 2209/50; H04L 2209/56

(54) **IMPROVEMENTS IN MULTI-PARTY COMPUTATIONS**

VERBESSERUNGEN BEI MEHRPARTEIENBERECHNUNGEN

AMÉLIORATIONS APPORTÉES À DES CALCULS À PLUSIEURS PARTIES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2020 Bulletin 2020/52**

(73) Proprietor: **Sedicii Innovations Ltd.**
**X91 P20H Waterford (IE)**

(72) Inventors:
• **DE Vega Rodrigo, Miguel**
  **38009 Santa Cruz de Tenerife (ES)**
• **Leslie, Rob**
  **Waterford (IE)**
• **Díaz, Néstor Álvarez**
  **38310 Santa Cruz de Tenerife (ES)**
• **Toledo, Sergio Medina**
  **38629 Santa Cruz de Tenerife (ES)**

(74) Representative: **FRKelly**
**27 Clyde Road**
**Dublin D04 F838 (IE)**

(56) References cited:
**US-A1- 2009 177 591      US-A1- 2013 085 916**
**US-A1- 2015 341 326**

**Description**

Technical Field

This invention relates to improvements in multi-party computations, enabling a plurality of parties communicating over a network to perform a computation requiring information from each party without each party revealing its private information.

Background Art

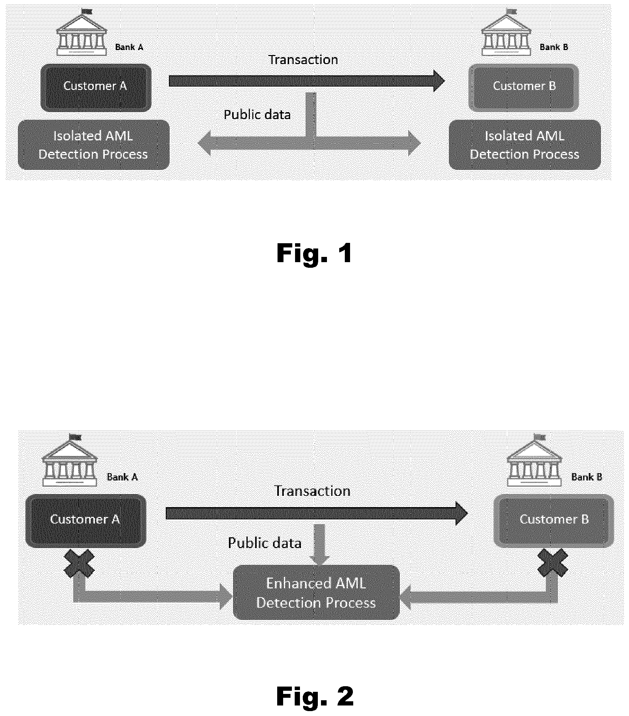

Figure 1 illustrates a typical AML scenario involving two financial institutions in the regulated financial sector, Bank A and Bank B. The regulated financial sector refers to institutions that are obligated to implement systems of work to detect and prevent money laundering activity.
Examples of organisations in this sector include banks, law firms, accountants, insurance and pension companies, stock brokers, money transfer agents, oil and gas companies, valuable metal brokers, real estate agents, and essentially any company involved in the movement of fiat currency.
This scenario can be directly translated to the exchange of crypto instead of fiat currency. In this case the Banks would be the wallets or exchanges. The scenario also applies to government organisations that wish to jointly compute a function in the context of CTF (Counter-Terrorist Financing) without sharing information. This solution is particularly appealing in the cross-border case where the different agencies belong to different governments.
In Figure 1, Customer A from Bank A is sending a transaction to Customer B from Bank B. Any of these customers could be a company or a physical person. Typically, the transaction has some public information. For instance, in the case of a SWIFT transaction between two end-users the following attributes are public:

- Sender and beneficiary account number, bank BIC
- Booking date
- Amount
- Execution date
- Beneficiary bank address
- Reference number
- Beneficiary name and address

Banks are subject to several regulations around data protection and client banking secrecy which prevent them from being able to share information about their customer with other banks. More specifically, Bank A's AML detection process cannot rely on any personal information about Customer B beyond what is published on the transaction itself. The same applies to Bank B and Customer A. This is why Figure 1 refers to the AML detection processes from Banks A and B as two processes running in isolation.
This situation is the state-of-the-art for current AML detection processes, which are inherently inefficient since they cannot exploit personal information about the customer from the other bank. For example, let us assume that Customer A sends $15000 to Customer B. The sender bank cannot share with the recipient bank the answer to personal questions about Customer A. Some of these questions could be:

- Is there any PEP (politically exposed person) flag on Customer A?
- Does the nationality of Customer A match the transaction currency?
- Is the amount sent within normal thresholds for Customer A?
- Is Customer A from a country on a risk list?
- Has Customer A's account triggered an alert in the last 6 months?
- Is Customer A and employee at Bank A?

A similar situation applies to the sender bank and information from Customer B at the recipient bank.
Ideally, a process between banks A and B would have the following characteristics:

**Requirement 1 - Enhanced Detection:** Both banks would define an AML detection process that combines the answers to these and other similar questions about Customers A and B in order to estimate the AML risk associated to a transaction.

**Requirement 2 - Privacy:** Neither bank shares personal information or the answers to these questions with the other bank or any third party.

The following solutions constitute attempts at reconciling these two seemingly exclusive requirements:

1. **Secure Enclaves:** the banks send the answers to the security questions about their customer in encrypted form to a secure enclave or trusted execution environment from a trusted third Party where the AML detection process runs in full privacy, obtaining a result that is shared with the banks.

2. **Homomorphic Encryption:** the banks encrypt the answers to the security questions about their customers and perform the computations corresponding to the AML detection process directly on the encrypted values using the homomorphic properties of the underlying encryption system.

3. **Hashing:** the banks compute hashes of their customer personal information, exchange the hashes and compare them to look for money laundering evidence.

4. **Multi-Party Computation (MPC):** the banks execute in distributed mode the computations pertaining to the AML detection process.

One problem with Solutions 1 and 2 is that they require encryption and regulators tend to regard encrypted personal information as personal information that demands the same level of customer consent as if the information had to be sent in plaintext. This is for instance the European Commission's view on GDPR, stating that "Reversibly encrypted personal data is personal data" and thus falls within the framework of GDPR.

Solution 3 uses the comparison of hashes of personal data to determine if two organisations have the same information. This knowledge is then exploited in the context of AM L and CTF (Counter-Terrorist Financing). This approach, taken for instance by Europol with the Ma3tch system (P. Balboni, M. Macenaite, Privacy by design and anonymisation techniques in action: Case study of Ma3tch technology, Computer Law & Security Review, Volume 29, Issue 4, 2013, Pages 330-340, ISSN 0267-3649, https://doi.org/10.1016/j.clsr.2013.05.005), presents two problems. First, no complex AML/CTF algorithms can be used, just a direct one-to-one attribute matching. Second, the European Commission does not have a clear view yet as to whether hashed personal information should be regarded as personal information

Regarding MPC protocols, the same situation as in Solutions 1 and 2 applies, since most of them require sending personal information in encrypted form as well. This is the case for instance of Yao's protocol, a well-known approach to MPC.

US2013/085916A1 discloses a computer-based system and method directed to the determination of aggregate metrics of select financial indicators utilizing a protocol that allegedly preserves the confidentiality of the individual data sets comprising the aggregate metrics.

US2009/177591A1 discloses a method for facilitating exchange of assets bundled into one or more baskets of assets that allegedly maintains secrecy of the assets.

US2015/341326A1 discloses systems and methods for delegating computations of resource-constrained mobile clients, in which multiple servers interact to construct an allegedly encrypted program representing a garbled circuit.

It would seem therefore that none of the above solutions meets the necessary requirements to comply with existing regulations.

Disclosure of the Invention

The aforementioned problem is solved by the features of the independent claims. Further embodiments are the subject-matter of the dependent claims.

In a first aspect, there is provided a computer-implemented method, carried out between a first party A and a second party B over a communications network, of calculating the result r of a Boolean function F having a first secret input $\alpha$ known to the first party A and a second secret input b known to the second party B, without either party sharing its secret input with the other party, the method comprising the steps of:

a) party A generating two data items $L_a$, $R_a$ wherein $L_a$ appears to be random data and wherein $\alpha$ is derivable from $L_a$ and $R_a$ together, and party B generating two data items $L_b$, $R_b$ wherein $R_b$ appears to be random data and wherein b is derivable from $L_b$ and $R_b$ together;

b) each party sharing its respective random data item $L_a$, $R_b$ with the other party over the network;

c) dividing said Boolean function F into separate subfunctions $SF_A$, $SF_B$, wherein subfunction $SF_A$ takes $L_a$, $L_b$, $R_a$, $R_b$ as inputs and outputs an intermediate result ra and wherein subfunction $SF_B$ takes $L_a$, $L_b$, $R_a$, $R_b$ as inputs and outputs an intermediate result $r_b$ and wherein the result *r* of Boolean function F is defined as r = $r_a$ Q $r_b$, where ⊙ is an arbitrary logic gate;

d)

(i) party A computing all possible values of $r_a$, using $L_a$, $R_a$ and $L_b$, together with all possible values of $R_b$;

(ii) party B computing all possible values of $r_b$, using $L_a$, $R_a$ and $R_b$, together with all possible values of $L_a$;

e)

(i) party A sending to party B a first ordered data set of all possible values of $r_a$ encrypted with a key $\sigma_a$ that is secret to party A, such that the first ordered data set includes the correct result $r_a$ encrypted as $s_a$, together with a plurality of meaningless values;

(ii) party B sending to party A a second ordered data set of all possible values of $r_b$ encrypted with a key $\sigma_b$ that is secret to party B, such that the first ordered data set includes the correct result $r_b$ encrypted as $s_b$, together with a plurality of meaningless values;

f)

(i) party A selecting $s_b$ by using the real value of $R_a$ to identify the expected position in the second ordered data set of the correct encrypted value;

(ii) party B selecting $s_a$ by using the real value of $L_b$ to identify the expected position in the first ordered data set of the correct encrypted value;

g)

(i) party A encrypting $s_b$ with a key $\mu_a$ that is secret to party A, resulting in a further encrypted data item $p_a$, and sending $p_a$ to party B;

(ii) party B encrypting $s_a$ a key $\mu_b$ that is secret to party B, resulting in a further encrypted data item $p_b$, and sending $p_b$ to party A;

h)

(i) party A determining from $s_b$, $p_a$, $\mu_a$ and $\sigma_a$ the result $r$ of the function F; and
(ii) party B determining from $s_a$, $p_b$, $\mu_b$ and $\sigma_b$ the result $r$ of the function F.

It can be seen that the information shared across the network at each step of the process is random data. Neither party is provided at any point in the process with information enabling it to gain any knowledge of the other party's secret, and any third party intercepting the transferred information over the network only sees data that appears random.

In the standard GMW (Goldreich-Micali-Wigderson) MPC the parties would share their privately calculated results $r_a$ and $r_b$ via a secure communication channel in order to obtain the overall result r. Since the secure communication channel could be potentially breached the exchange of $r_a$ and $r_b$ constitute an exchange of information. This makes the standard GMW MPC inadequate for scenarios subject to strong data protection regulations.

Preferably, step h) comprises:

- party A computing $u_a = p_a \, Q \, s_b$, and sending $u_a$ to party B ;

- party B computing $u_b = p_b \odot s_a$, and sending $u_b$ to party A;

- party A computing $v_a = \mu_a \oplus u_b \oplus \sigma_a$, and sending $u_b$ to party B;

- party B computing $v_b = \mu_b \oplus u_a \oplus \sigma_b$ and sending $v_b$ to party A;

- party A computing the result $r = \sigma_a \oplus v_b$ and

- party B computing the result $r = \sigma_b \oplus v_a$.

Preferably, in step a), party A generates a random string $L_a$ and computes a residue $R_a = a \oplus L_a$, and party B generates a random string $R_b$ and computes a residue $L_b = b \oplus R_b$.

Preferably, the encryption in step e) is a one-time pad with the respective keys $\sigma_a$ and $\sigma_b$.

Preferably, the encryption in step g) is a one-time pad with the respective keys $\mu_a$ and $\mu_b$.

Preferably, the keys $\sigma_a$ and $\mu_a$ are different from each other, and the keys $\sigma_b$ and $\mu_b$ are different from each other.

Preferably, in step d) party A computes all possible values of $r_a$ using all possible values of $R_b$ taken in an ordered sequence known to party B, and party B computes all possible values of $r_b$ using all possible values of $R_a$ taken in an ordered sequence known to party A, and wherein the ordered data sets sent in step e) preserve the sequence or are indexed to permit the receiving party to identify a value according to the ordered sequence employed for the computation.

Preferably, steps (a) to (h) are repeated in succession for a first Boolean function $F_1$ followed by a second Boolean function $F_2$.

Preferably, step (c) of dividing said Boolean function F into separate subfunctions $SF_A$, $SF_B$ comprises:

- defining the function F as a Boolean circuit such that the result $r = S_1 \odot S_2 \odot \cdots \odot S_n$, where $\odot$ represents any logic gate function;

- implementing a desired computational split (k : n-k) between the parties such that party A will perform k/n of the computations and party B will perform (n-k)/n of the computations;

- defining subfunction $SF_A$ with result $r_a = S_1 \odot S_2 \odot \cdots \odot S_k$, and subfunction $SF_B$ with result $r_b = S_{k+1} \odot S_2 \odot \cdots \odot S_n$.

Preferably, the Boolean circuit is defined such that $r = S_1 \odot S_2 \odot \cdots \odot S_n$ is defined in the form with the lowest number of levels, wherein a level comprises all the logical gates which can be computed from the available inputs at a given time.

Preferably, the Boolean circuit is represented as a DNF (Disjunctive Normal Form) such that $r = S_1 \vee S_2 \vee \cdots \vee S_n$ where $\vee$ is an OR operation.

Preferably, the Boolean circuit is represented as a CNF (Conjunctive Normal Form) such that $r = S_1 \wedge S_2 \wedge \cdots \wedge S_n$ where $\wedge$ is an AND operation.

Preferably, k is between 0.4n and 0.6n, and more preferably where k is between 0.45n and 0.55n, most preferably where k = 0.5n rounded to an integer value.

Preferably, the Boolean function F is a risk assessment algorithm for evaluating a transaction involving a first participant of which party A has secret knowledge and a second participant of which party B has secret knowledge.

Preferably, said risk assessment algorithm is selected from: an anti-money laundering algorithm wherein parties A and B are involved in effecting said transaction; and a counter-terrorist financing assessment algorithm wherein parties A and B have intelligence regarding the parties involved in the transaction.

Preferably, said transaction is a transaction using a distributed ledger technology, including blockchain.

Preferably, said method is operated in real time in the context of a transaction in which parties A and B are participating.

Alternatively, said method may be operated in batched mode in the context of a transaction in which parties A and B have previously participated.

In certain embodiments, said method is operated twice in respect of a transaction in which parties A and B are participants, with a first operation occurring in real time as the transaction is taking place and with a Boolean function $F_1$ which has a computational requirement sufficiently low as to permit completion within a typical transaction timescale, and a second operation taking place after the transaction, and optionally within a batched operation, and with a Boolean function $F_2$ which has a computational requirement higher than $F_1$.

Suitably, the communications network over which the parties communicate comprises a plurality of connected networks.

Preferably, each party generates a cryptographic commit to (i) its secret input **a** or **b,** and (ii) its data item $R_a$ or $L_b$ that is not shared with the other party.

Preferably, when a random data item $L_a$ or $R_b$ is based on the output of a pseudo-random number generator, the party generating that random data item also generates a cryptographic commit to a seed used as input to the pseudo-random number generator.

Preferably, each party signs and sends to the other party each of said commits it has generated.

Preferably, each party signs and stores a copy of each message sent to the other party.

Preferably, each party stores each signed message received from the other party.

Preferably, the method further comprises the step of signing one or more messages to be sent to another party, and storing a copy of the signed message in a distributed ledger, such as a blockchain

There is also provided a computer program comprising instructions which when executed by a computing device of a party participating in the methods disclosed above, are effective to cause said device to implement the method steps of one of the parties A or B.

In a second aspect, there is provided a computer-implemented method of a party operating a multi-party computation (MPC) in cooperation with one or more remote parties via a network, comprising the steps of:

a) said party providing one or more secret inputs to said MPC and one or more shared inputs;

b) said party exchanging one or more messages with at least one of said one or more remote parties;

c) said party generating a cryptographic commit to each of its secret inputs;

d) said party signing each of its messages;

e) said party receiving one or more signed messages from at least one of said one or more remote parties;

f) said party storing each received signed message.

Preferably, said party generates random data as an input to said MPC using a pseudo-random number generator, and further comprising the step of generating a cryptographic commit to a seed provided as an input to said pseudo-random number generator.

Preferably, the method further comprises the step of sending at least one of said cryptographic commits to at least one of said one or more remote parties.

Preferably, all cryptographic commits relating to a shared computation with a remote party are sent to that remote party.

Preferably, each party is operating said MPC in accordance with any of the methods of the first aspect recited above.

In a third aspect there is provided a computer-implemented method of auditing a multi-party computation (MPC) between a plurality of parties, wherein the parties each operate according to the method of the second aspect, comprising the steps of:

a) receiving from each party to the MPC a copy of every commit and a corresponding opening for each commit;

b) receiving a copy of each signed message sent or received during the operation of the MPC;

c) verifying that each opening correctly authenticates its corresponding commit;

d) repeating the MPC operation using said openings and messages to verify that the openings are consistent with the output of the MPC.

Brief Description of the Drawings

Fig. 1 is an illustration of a transaction between customers of different banks;

Fig. 2 is an illustration of a transaction in which an enhanced AML detection process is incorporated;

Figure 3 is an illustration of a transaction framework for implementing an enhanced AML process;

Figure 4 is an extension of the transaction framework to include multiple additional information sources;

Fig. 5 is an overview of the steps in a method that takes place when Parties A and B jointly execute the AML detection process;

Fig. 6 is an illustration of the Boolean function and its division between the two parties;

Fig. 7 is an explanatory diagram of the Boolean subfunctions calculated by each party;

Fig. 8 is a detailed view of the flow of steps in a method that takes place when Parties A and B jointly execute the AML detection process;

Fig. 9 is a flowchart of a method for dividing a Boolean function into appropriate subfunctions;

Fig. 10 is a view of the flow of steps in a method for adding auditable information to the AML process; and

Fig. 11 is a flowchart of the auditing phase.

Detailed Description of Preferred Embodiments

Fig. 2 provides a conceptual non-technical description of the proposed solution. A Customer could be an individual or an organisation. The scenario naturally extends to the case in which instead of banks we have the following parties, or a combination thereof: law firms, accountants, insurance and pension companies, stock brokers, money transfer agents, oil and gas companies, valuable metal brokers, real estate agents, and essentially any company involved in the movement of fiat currency. In this scenario, a Transaction represents any form of movement of fiat or crypto currency.

In Fig. 2, Customer A from Bank A sends a transaction to Customer B from Bank B. Banks A and B define an enhanced AML detection process that uses personal information from Customers A and B. Banks A and B engage in a private MPC (in short PMPC), which is able to execute the enhanced AML detection process without requiring the Banks to share their private customer information.

In this section we present the EAC system and show that it fulfils the following requirements (the first two were introduced in the previous section):

- **Requirement 1 - Enhanced Detection:** Both banks can define an AML detection process that combines the answers to a series of security questions about Customers A and B in order to estimate the AML risk associated to a transaction.

- **Requirement 2 - Privacy:** Banks neither share personal information nor any result from the AML detection process, including intermediary results as well as the final result.

- **Requirement 3 - Auditability:** A Bank can prove to an Auditor (e.g. financial regulator or law enforcement) that it injected certain information into the AML detection process by revealing their input information in plaintext and providing a cryptographic proof. By repeating this process with each bank, the Auditor receives all the inputs to the AML detection process and can find out exactly why it rejected or accepted the transaction.

The EAC system uses a novel enhanced GMW MPC, which we refer to as PMPC (Private Multi-Party Computation).

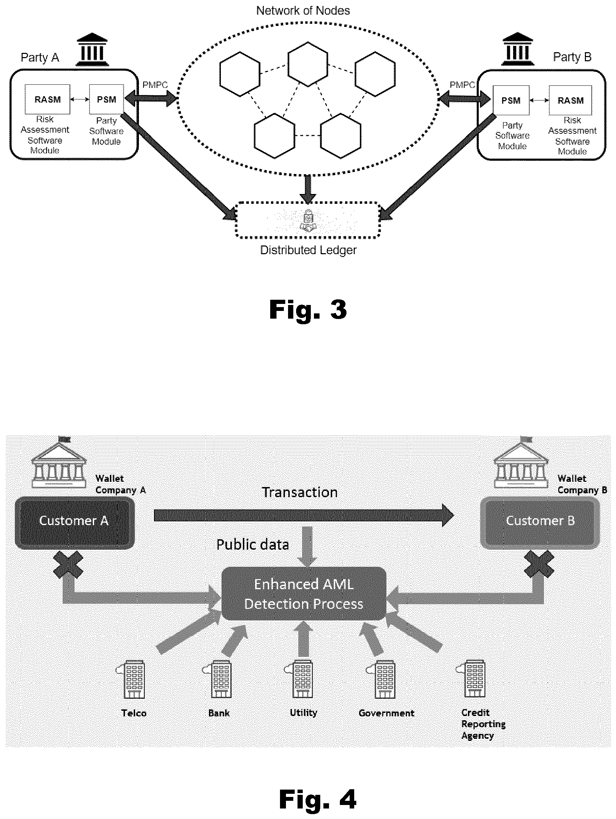

Fig. 3 illustrates the EAC system. Each Party has two modules, the PSM and the RASM:

- **PSM:** Executes the AML detection process using the underlying PMPC that enables Parties A and B obtain the result without having to share their inputs to the detection process

- **RASM:** It performs three tasks

    ◦ It initiates the execution of an AML detection process

    ◦ It provides the inputs to the AML detection process (i.e., the answers to the security questions)

    ◦ It processes the result from the AML detection process and takes the appropriate measures

In a possible system implementation, the two Parties establish a direct peer-to-peer connection. The PSM modules are directly connected and there is no intermediary network of nodes between them. In our preferred system implementation, a network of one or more nodes forward the communication between the two parties, as shown in Fig. 3. The network of nodes provides a series of advantages over the direct peer-to-peer connection:

- Logging: Logging is simple when the PMPC communication is forwarded through one or several nodes. Since it comprises random noise containing absolutely no information (see Appendix A) this communication can be safely stored by a node for auditing, analytics or billing purposes. To add redundancy, several nodes may store logging information. A node behaving as a bad actor cannot alter the information it forwards to the other nodes since it is signed by its sender; the Party. Therefore, good actors should all publish the same logs and logs from bad actors can be easily detected.

- Auditing: The parties keep logs of the messages they send and receive with the other party. If one Party lies to the auditor regarding the messages it sent to the other Party there will be a discrepancy between the logs from the two parties. Having one or several intermediary nodes that forward the messages between the parties can help resolve this kind of disputes.

- Unified Legal Framework: The organisation governing the network of nodes can provide a unified legal framework for all parties to operate. This way, a Party does not need to close a separate agreement with each one of the (n - 1) parties in the system in order to be able to jointly run the AML detection process. One legal agreement suffices, which substantially saves paperwork and simplifies governance.

- Interoperability: The organisation governing the network of nodes can provide a unified data model. This way, a Party does not need to implement (n - 1) ad hoc integrations in order to be able to work with (n -1) parties. One integration suffices. Without a unified data model, answers to questions such as "Is $15,000 normal for the customer profile " cannot be safely used by a risk assessment algorithm, since "normal for the customer profile" may have different meanings to different parties.

- Orchestration: It suffices for each Party to connect to one node in the network. The network's transport layer takes care of routing the messages to the corresponding Party with delivery guarantees

In a possible implementation, the parties and the network nodes (if present) locally store logging information. In our preferred implementation, they store this information on a distributed ledger technology (DLT), such as a blockchain. The immutability property of the DLT guarantees non-repudiation.

The EAC system architecture in Fig. 3 can be extended to AML detection processes that take place among more than 2 parties. In this setup n parties define an AML detection process that takes inputs from them. Using PMPC the n parties are able to obtain the result from this AML detection process without having to actually share their inputs with the other parties. Some examples are:

- **Complex transactions:** These are transactions between one sender and more than one receiver, between more than one sender and one receiver or a mixture of the two

- **Several transactions:** Instead of constraining the AML detection process to the information provided in one transaction, multiple transactions among multiple parties are analysed together by a common AML detection process in order to detect money laundering or terrorist financing patterns across one or multiple institutions.

- **Transactions with additional sources of information:** For instance, a government could act as an additional Party in the PMPC. Governments are authoritative sources of identity information for a citizen (Customer A or B, or both) so they could provide the AML detection process with information on the status of the customer identity (e.g. valid, expired, declared lost or stolen, revoked). In another example, a utility company or a telecommunications company could act as an authoritative source of address information for a citizen (customer A or B, or both) and confirm if the customer name and address match the bank records. These examples are represented in Fig. 4.

As represented in Fig. 4, the EAC system in Fig. 3 can be directly applied to a DLT (Distributed Ledger Technology) scenario such as a blockchain. In this case, the bank accounts can be fiat and/or crypto wallet accounts, the banks would be the companies owning the wallets or the crypto exchanges (Wallet Companies) in which the wallets are located, and the transaction can be crypto-to-crypto (including the same or different crypto), crypto-to-fiat or fiat-to-crypto. Wallet Companies A and B engage in a joint execution of an enhanced AML detection process that takes as inputs the public transaction data (if any), the customer information held at Wallet Companies A and B, and optionally additional customer information provided by external sources. However, by virtue of PMPC none of these parties need to exchange, expose or send this personal customer data. In this scenario the EAC system provides AML detection to crypto-transactions while keeping compliance with data protection regulations that may be applicable in this sector in the future.

The EAC system can also be applied to a CTF (Counter-Terrorist Financing) scenario in which several government agencies from the same country or across borders would like to like to learn something about a subject without having to expose any information on the subject. The subject could be one or more physical persons, one or more organisation or combinations thereof. For instance, n intelligence agencies which have data on a subject would like to combine their information according to a predefined CTF algorithm in order to gain knowledge in relation to CTF but without revealing their information to the other agencies. The CTF algorithm plays the same role as the AML detection process described above.

The EAC system of Fig. 3 can operate in three modes:

- In **real-time mode** the AML detection process is executed before the transaction is sent. The time constraints inherent to this mode pose restrictions on the complexity and efficiency of the AML detection process.

- In **batch mode** the AML detection process is executed after the transaction is sent. In the absence of time constraints, the AML detection process can be more complex and efficient. However, when a problem is detected in batch mode it is often too late to perform any meaningful AML or CTF action.

- In a **mixed mode,** a lightweight part of the AML detection process is executed in real-time before the transaction is sent. If this part of the process detects suspicious patterns the transaction is pulled out of the queue and it is thoroughly analysed by a second more complex and efficient part of the AML detection process. This second part of the process is still executed before the transaction is sent. If the lightweight part of the AML detection process detects no suspicious pattern then the transaction is executed and optionally the second part of the AML detection process is executed. The mixed mode barely penalizes the transaction throughput because as in the real-time mode only a lightweight AML detection process is executed before the transaction is sent. However, it provides better efficiency than the real-time mode because suspicious transactions are analysed in more detail. Also, it provides insights that are more actionable than in batch mode because some of them are obtained before the transaction is sent. The mixed mode is our preferred implementation of the system.

The PMPC Process

We now present the PMPC and explain why it preserves customer privacy, as well as where exactly it differs from the standard GMW MPC.

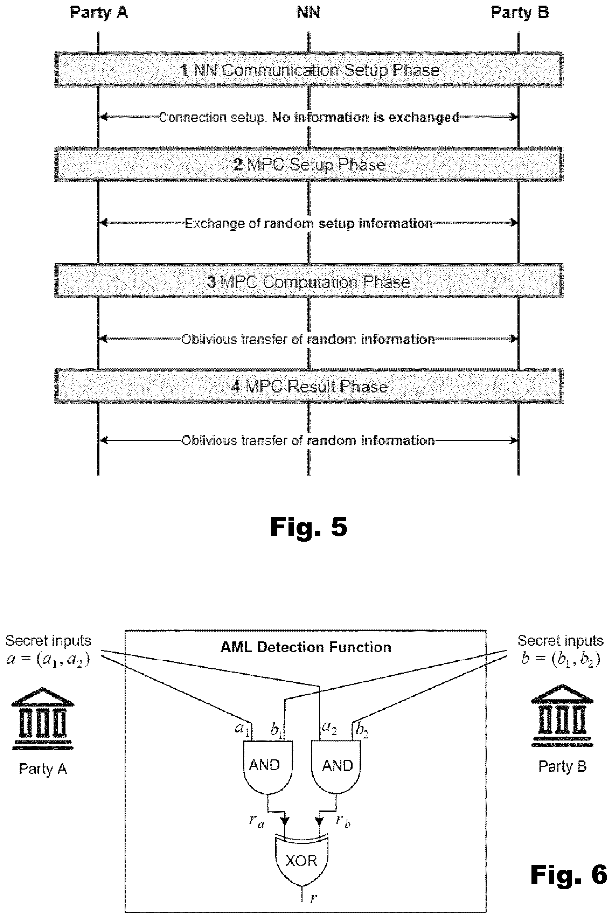

Figure 5 illustrates the flow that takes place when Parties A and B jointly execute the AML detection process. The flow is divided in 4 phases:

1. Communication Setup Phase: The two Parties establish a connection. Alternatively, the network of nodes (NN) connects the two of them using some sort of network layer protocol (e.g. IP) and establishes a connection with guaranteed packet delivery using some sort of transport protocol (e.g. TCP).

2. MPC Setup Phase: Parties prepare for the MPC exchanging random strings.

3. MPC Computation Phase: Parties engage into an interactive MPC using a cryptographic primitive called Oblivious Transfer (see note below on OT). All exchanged messages are one-time-padded using random strings so that the messages are completely random (see note below on one-time-padding).

4. MPC Result Phase: Each Party obtains the same result from the execution of the AML detection function.

Note that during this flow, (i) neither Party learns about the input from the other party, and (ii) no information is exchanged between parties, only random strings.

Oblivious Transfer (OT) allows Party A to send several hidden results to Party B so that:

1. Party B is only able to reveal one result

2. Party A does not learn about which result Party B chose to reveal

In the context of MPC, OT is used by Parties A and B to be able to collaboratively compute a function without revealing their inputs to each other. For instance, let us assume that the function is the result of an AND gate applied to a secret bit **a** coming from Party A and to a secret bit **b** coming from Party B. In this case, Party A can compute the two results for the AND gate for every possible value of bit **b** and send them using OT to Party B. Party B will reveal the result corresponding to the value of bit **b,** which is the result of the MPC. From 1) above it follows that Party B cannot reveal the other result and therefore does not learn any information beyond the result of the MPC computation. From 2) above it follows that Party A does not learn about which result Party B chooses, which in this context would reveal the value of bit **b.** Therefore, both parties are able to compute the function without revealing their secret input.

One-time padding is a simple transformation that uses a random string (i.e. the context) to transform a piece of data into another piece of data that is indistinguishable from random noise. The reason we can say it is noise is because there is no context for any Party that receives it. Until context is provided no meaning can be extracted and the only Party that has the context is the original Party that did the one-time-padding. One-time-padding is a cryptographic commitment schema that provides perfect hiding. That is, when a secret string containing information is one-time-padded with a random string, the resulting string is a random string that carries no comprehensible information from the original string. We write this as follows:

$$p = s \oplus r$$

Where s is the secret string containing information, **r** is the random string, $\oplus$ is the XOR operation and **p** is the resulting random one-time-pad of **s.** Perfect hiding implies that it is impossible to recover the original string **s** containing information, even with infinite computational power, unless the random string **r** is known.

In order to understand why no Party exchanges secret information throughout the flow in Fig. 5 we can illustrate with an example of a simple AML detection function, which we then generalise to a generic function.

Let us assume that Parties A and B wish to compute the AML detection function:

```
IF ((response to question a₁ == TRUE AND response to question
b₁ == TRUE) XOR (response to question a₂ == TRUE AND response
to question b₂ == TRUE)) THEN
    r = TRUE
ELSE
    r = FALSE
END IF
```

For instance, $a_1$, $a_2$, $b_1$, $b_2$ could be the respective responses to the following questions:

- $a_1$ : "Is the sender Russian?"

- $a_2$ : "Is 40,000 to 50,000 normal for the sender profile?"

- $b_1$ : "Is the recipient in real estate related industry?"

- $b_2$ : "Is the recipient from a sanctioned country?"

In this computation Party A responds to questions $a_1$ and $a_2$ and Party B responds to questions $b_1$ and $b_2$ but they do not wish to share their answers. Noting that it is always possible to translate any AML detection function into a Boolean circuit because the latter are Turing complete, the AML detection function can be expressed as a Boolean function:

$$r = r_a \oplus r_b = a_1{}^{\wedge}b_1 \oplus a_2{}^{\wedge}b_2$$

where ^ represents an AND gate and $\oplus$ a XOR gate. Party A and Party B contribute, respectively, with secret inputs $a$ = ($a_1$, $a_2$) and b = ($b_1$, $b_2$) to the computation, where $a_1$, $a_2$, $b_1$, $b_2$ are bits.

Fig. 6 illustrates this example scenario, showing the Boolean circuit with its inputs, the computation of intermediate results by each party A and B, and the combination of these results to give a final result **r.**

Referring back to Fig. 5:

Phase 1

Phase 1 since it comprises a standard connection setup that is not specific to this technology.

Phase 2

In Phase 2 (MPC Setup) each Party breaks down its secret inputs in two pieces, one which is purely random and contains no information (denoted with superscript $), and another which contains information.

Party A:

- Secret input $a_1$ is broken down into random $L_{a_1}^{\$}$ and a share $R_{a_1}$ according to

$$a_1 = L_{a_1}^{\$} \oplus R_{a_1},$$

- Secret input $a_2$ is broken down into random $L_{a_2}^{\$}$ and a share $R_{a_2}$ according to

$$a_2 = L_{a_2}^{\$} \oplus R_{a_2}.$$

Party B:

- Secret input $b_1$ is broken down into random $R_{b_1}^{\$}$ and a share $L_{b_1}$ according to $b_1 = L_{b_1} \oplus R_{b_1}^{\$}$ ,
- Secret input $b_2$ is broken down into random $R_{b_2}^{\$}$ and a share $L_{b_2}$ according to $b_2 = L_{b_2} \oplus R_{b_2}^{\$}$ .

Each Party sends the random parts to the other Party:

- Party A sends $L_{a_1}^{\$}$ and $L_{a_2}^{\$}$ to Party B
- Party B sends $R_{b_1}^{\$}$ and $R_{b_2}^{\$}$ to Party A

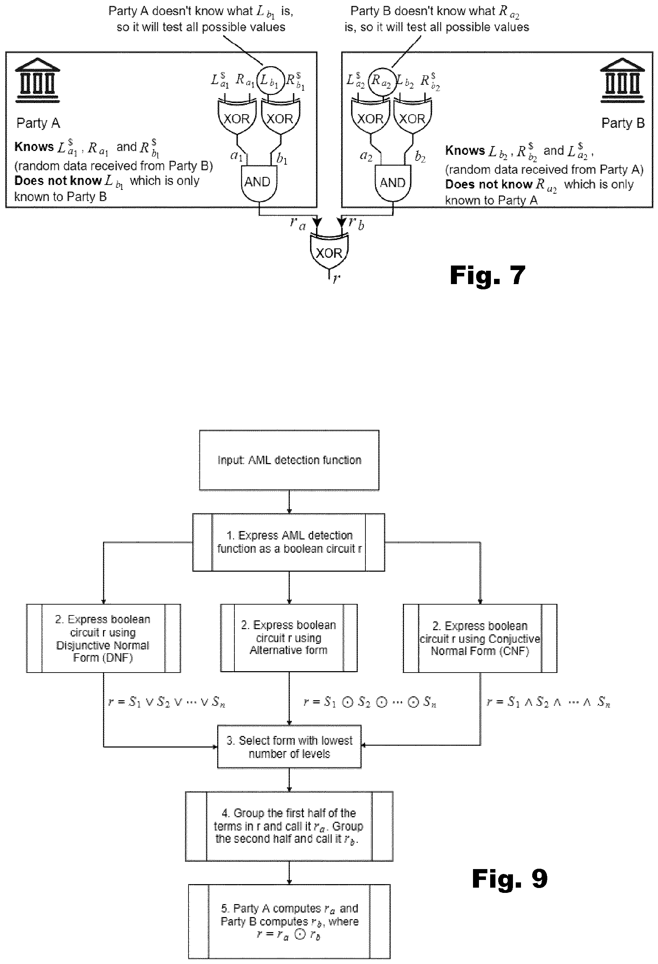

Since Parties only send random data it follows that no information is exchanged in Phase 2.
After breaking down the inputs, the Boolean circuit in Fig. 6 can be represented as now shown in Fig. 7.

**Phase 3.**

In Phase 3, each Party computes half of the circuit, as illustrated in Fig. 7. Party A computes $r_a$ and Party B computes $r_b$.

Let us focus on Party A (see left of Fig. 7), which knows $L_{a_1}^{\$}, R_{b_1}^{\$}$ (random), as well as its share $R_{a_1}$ derived from its secret $a_1$, but which does not know the share $L_{b_1}$, a bit that contains information derived from Party B's secret $b_1$. Since $L_{b_1}$ can only take two possible values in our example (0 or 1), Party A computes the value of $r_a$ in each one of these two scenarios.
Party A then hides each possible value of $r_a$ using a one-time-pad so that they become random strings which are safe to send to Party B.
Party B uses oblivious transfer to reveal the correct one-time-padded value of $r_a$ depending on the actual value of $L_{b_1}$. Party B then one-time-pads this result and sends it back to Party A.
The same operation takes place for Party B on its half of the circuit (see right of Fig. 7). Party B knows all inputs except for $R_{a_2}$, so it computes $r_b$ when $R_{a_2} = 0$ and when $R_{a_2} = 1$. It then hides the results and sends them to Party A, which uses oblivious transfer to uncover the correct one-time-padded result. Party A then hides this result again with one-time-padding and sends it back to Party B.
All information exchanged between the Parties is hidden using one-time-pads. Thus, it consists of pure random strings containing no comprehensible information.

**Phase 4.**

Each Party has received one-time-padded versions of $r_a$ and $r_b$. Using one-time-padding, they are able to obtain the result of the overall computation $r$ of the AML detection function.

In the standard GMW MPC the parties share $r_a$ and $r_b$ via a secure communication channel in order to obtain the overall result $r$. Since the secure communication channel could be potentially breached the exchange of $r_a$ and $r_b$ constitute an exchange of information. This makes the standard GMW MPC inadequate for scenarios subject to strong data protection regulations.

In order to overcome this limitation, the PMPC uses in Phase 4 one-time-padding to prevent leaking any information. Thanks to this we can conclude that the whole process is privacy-preserving because only random abstract strings unrelated to any customer data are exchanged between parties.

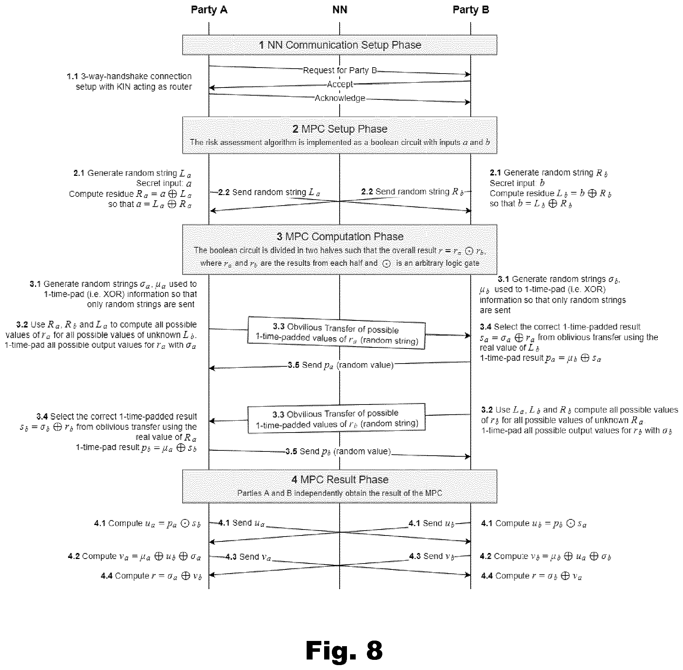

Turning next to Fig. 8, a generic detailed version is presented of the flow described in Fig. 5 that works with any AML detection process (i.e. with an arbitrary Boolean function). Steps assigned with the same number take place in parallel, although in Fig. 8 they may appear sequentially (see for instance step 3.1).

**Phase 1**

During this phase the KIN facilitates the discovery of Party B and the establishment of a connection using a 3-way-handshake.

**Phase 2**

The AML detection function is implemented as a Boolean circuit with secret input binary vectors **a** and **b** from Parties A and B, respectively.

- **Step 2.1** [IN PARALLEL]: Each Party generates a random string and uses it in order to split its secret input in two parts, $\mathbf{L_a}$ for Party A and $\mathbf{R_b}$ for Party B (L stands for left, and R for right).

- **Step 2.2** [IN PARALLEL]: Parties exchange the generated random strings $\mathbf{L_a}$ and $\mathbf{R_b}$.

**Phase 3**

The Boolean circuit is divided in two halves separated by an arbitrary logic gate, each Party A and B computes the result $\mathbf{r_a}$ and $\mathbf{r_b}$ of each half.

Phase 3 is divided in the following steps:

- **Step 3.1:** Each Party generates random strings used to one-time-pad information so that only random strings are exchanges between the parties

- **Step 3.2:** Each Party computes all possible result values for its assigned half of the circuit using all possible values of the unknown secret $\mathbf{R_a}$ or $\mathbf{L_b}$ kept by the other Party A or B, respectively.

- **Step 3.3:** Parties exchange one-time-pads of all possible values using OT. Notice that the one-time-pads are purely random.

- **Step 3.4:** Party B (respectively, A) reveals the correct one-time-padded result $s_a = \sigma_a \oplus r_a$ ($s_b = \sigma_b \oplus r_b$) from the computation of the corresponding half of the Boolean circuit. Notice that Party B (A) cannot access $r_a$ ($r_b$) because it is one-time-padded. Party B (respectively, A) one-time-pads $s_a$ ($s_b$) with its secret random string obtaining $p_a = \mu_b \oplus s_a$ (Pb = $\mu_a \oplus s_b$)

- **Step 3.5:** Party B (respectively, A) sends $p_a$ ($p_b$) to Party A (B).

All steps can be executed in parallel by the different Parties.

**Phase 4**

Parties A and B are now able to independently obtain the result of the MPC without the need for a secure channel by following the procedure described below:

- **Step 4.1:** Party A (respectively, B) computes $u_a = p_a \odot s_b$ ($u_b = p_b \odot s_a$).This is possible since Party A (respectively, B) obtained $s_b$ ($s_a$) in the oblivious transfer operation in Step 3.4 and received $p_a$ ($p_b$) from the other Party in Step 3.5. Party A (B) sends $u_a$ ($u_b$) to the other party.

- **Steps 4.2** and **4.3:** Party B (respectively, A) computes $v_b = \mu_b \oplus u_a \oplus \sigma_b$ ($v_a = \mu_a \oplus u_b \oplus \sigma_a$) and sends it back to the other party.

- **Step 4.4:** Party A (respectively, B) obtains the same result r from the computation of the whole Boolean circuit by computing $r = \sigma_a \oplus v_b$ ($r = \sigma_b \oplus v_a$)

All steps can be executed in parallel by the different Parties.

**Proof:**

We now show that the computation in Step 4.4 yields the correct output **r** of the whole Boolean circuit in the case of Party A. This result can be trivially applied to Party B.

In Step 3.4 we have that $s_a = \sigma_a \oplus r_a$ which implies that $p_a = \mu_b \oplus s_a = \mu_b \oplus \sigma_a \oplus r_a$. When Party A computes $u_a$ in Step 4.1 it is obtaining:

$$u_a = p_a \odot s_b = \mu_b \oplus \sigma_a \oplus r_a \odot r_b \oplus \sigma_b, \qquad \text{Equation 1}$$

where $r_b \oplus \sigma_b = \sigma_b \oplus r_b =$ by virtue of the commutative property of $\oplus$.

Party B computes in Step 4.2 $v_b = \mu_b \oplus u_a \oplus \sigma_b$. Considering Equation 1 this expands to:

$$v_b = \mu_b \oplus u_a \oplus \sigma_b = \mu_b \oplus \mu_b \oplus \sigma_a \oplus r_a \odot r_b \oplus \sigma_b \oplus \sigma_b$$

From the self-inverse ($A \oplus A = 0$) and the identity element ($0 \oplus A = A$) properties of the XOR function this simplifies to

$$v_b = \sigma_a \oplus r_a \odot r_b$$

Once more, from the self-inverse and the identity element properties of the XOR function it is clear that:

$$\sigma_a \oplus v_b = \sigma_a \oplus \sigma_a \oplus r_a \odot r_b = r_a \odot r_b = r$$

From which we conclude that in Step 4.4 Party A can successfully obtain the result r from the whole Boolean circuit. Notice that in the process a man-in-the-middle attack gains no information from **r**, **r$_a$** or **r$_b$**. The reason why the parties generate two random strings $\sigma_a, \mu_a$, is to eliminate this kind of attack. Indeed, if the parties generated only one random string (e.g. $\sigma_a$ for Party A, that is, $\mu_a = \sigma_a$) and if the circuit was divided with a XOR function ($\odot$ is equal to $\oplus$), then an attacker combining $p_a = \sigma_b \oplus \sigma_a \oplus r_a$ and $p_b = \sigma_a \oplus \sigma_b \oplus r_b$ with a XOR function would obtain $p_a \oplus p_b = \sigma_b \oplus \sigma_a \oplus r_a \oplus \sigma_a \oplus \sigma_b \oplus r_b = \sigma_b \oplus \sigma_b \oplus \sigma_a \oplus \sigma_a \oplus r_a \oplus r_b = r_a \oplus r_b = r_a \odot r_b = r$, the result from the circuit. By generating two random strings $\sigma_a$, $\mu_a$ at the Parties this situation cannot take place.

[End of Proof]

This method is an advantage compared to the state-of-the-art GMW MPC which requires setting up a secure communication channel for the parties to be able to exchange their corresponding shares. In addition, only random strings are exchanged, which makes the whole PMPC comply with banking secrecy and data protection regulations.

Fig. 9 presents a method for expressing any function (including an arbitrary AML detection function) as a Boolean circuit containing two parts separated by a logic function. Since at the end of the process each Party is going to compute one of the parts, it is important that the complexity of these parts is similar, so that the computational load is balanced between both parties. The steps described in Fig. 9 are the following:

1. The AML detection function is expressed as a Boolean circuit using well-known techniques. It is important to notice that any algorithm can be represented as a Boolean circuit, and therefore the method presented can support arbitrary AML detection functions

2. The Boolean circuit is represented as a DNF (Disjunctive Normal Form) as well as a CNF (Conjunctive Normal Form). A DNF is a sum (in Boolean algebra a sum is an OR operation, represented as V) of products (in Boolean algebra a product is an AND operation, represented as A) of its inputs. That is, $r = S_1 \vee S_2 \vee \cdots \vee S_n$, where $S_1, S_2, \cdots, S_n$ are products of the inputs from Parties A and B. A CNF is a product of a sum of its inputs. That is, $r = S_1 \wedge S_2 \wedge \cdots \wedge S_n$, where $S_1, S_2, \cdots, S_n$ are sums of the inputs from Parties A and B. Alternatively, the Boolean circuit might be expressed as a series of smaller circuits $S_1, S_2, \cdots, S_n$ combined using one or more logic gate functions different from OR or AND. That is, $r = S_1 \odot S_2 \odot \cdots \odot S_n$, where Q represents any logic gate function. For instance, it is well known that any Boolean circuit can be represented with just NAND gates or just NOR gates. Therefore, Q could be a NAND or NOR gate, but the approach also works if Q is a gate different from OR, AND, NAND or NOR.

3. The performance of the PMPC is sensitive to the number of levels in the circuit. A level comprises all the logical gates which can be computed from the available inputs at a given time. That is, level n consumes as inputs the outputs from level n-1, and the inputs to level 1 are the inputs from Parties A and B. All gates in a level can be computed in parallel, so the number of gates per level does not have a significant impact on performance. For that reason, at this step the form with the lowest number of levels, regardless of the number of gates per level, is selected.

4. The first n/2 terms in r are grouped together in A and the second n/2 terms in r are grouped together in B. That is, $r_a = S_1 \odot S_2 \odot \cdots \odot S_{n/2}$, $r_b = S_{n/2+1} \odot S_2 \odot \cdots \odot S_n$ and $r = r_a \odot r_b$, where Q represents any logic gate, including OR (DNF) and NAND (CNF).

5. The Boolean circuit representing the AML detection function can be represented as $r = r_a \odot r_b$, Party A computes $r_a$ and Party B computes $r_b$

If one Party has more computational resources than the other, then it is possible to allow the splitting point in Step 4 to be something different than n/2. For instance, in the DNF case $r_a = S_1 \vee S_2 \vee \cdots \vee S_k$, $r_b = S_{k+1} \vee S_2 \vee \cdots \vee S_n$. The closer k is to n the simpler circuit B becomes and therefore the less computational burden is imposed on the Party with least computational resources. In an extreme case k=1 or k=n, in which case one of the parties performs all computations.

The method can be naturally extended to more than two Parties. In this case, each Party divides their input in n parts, where n is the total number of Parties. Parts 1, ..., n-1 are completely random strings, each one sent to a different Party. The last part is the Party's share and is not sent. The Boolean circuit to be computed is divided in n smaller circuit separated by logic gates, following the method from Fig. 9. A significant difference now is that the logic gate Q that separates the different parts does not need to be the same type of gate. That is, the Boolean circuit r can be split according to $r = r_1 \odot_1 r_2 \odot_2 \cdots \odot_{n-1} r_n$, where each $\odot_1, \odot_2, \cdots, \odot_{n-1}$ can be a different logic gate type (OR, AND, XOR, NOR, NAND, etc.). During Phase 3 in Fig. 8 each Party *i* engages in OTs with the remaining (n-1) Parties in order to compute the one-time-padded result from its circuit $r_i$ following the procedure described in "Secure Multi-Party Computation of Boolean Circuits with Applications to Privacy in On-Line Marketplaces", Seung Geol Choi, Kyung-Wook Hwang, Jonathan Katz, Tal Malkin and Dan Rubenstein, Published in IACR Cryptology ePrint Archive 2011 DOI:10.1007/978-3-642-27954-6_26. This same procedure is used in Phase 4 in Fig.**Error! Reference source not found.** 8, where each Party engages in (n-1) OTs with the remaining Parties in order to independently compute the final result of the AML detection function.

The method can also be extended to the case in which each Party wishes to obtain the result to a different AML detection function. In this case the parties perform a separate PMPC in order to compute the result from AML detection function defined by each Party. That is, a total of n PMPCs. In Phase 4 in Fig. 8 of the i-th PMPC only the i-th Party needs to send the (n-1) OTs to the remaining (n-1) Parties in order to independently compute the final result of its AML detection function. This way, even though the other Parties participated in that computation, they do not necessarily have to learn its result.

**Verifiable Audits**

When a Party is audited for instance for AML compliance purposes it should be able to provide the auditor with a proof that shows that it injected certain input information into the AML detection process and that it properly followed the MPC process. We call this MPC with verifiable audits. The process we present here is applicable to any MPC, including Yao's garbled circuits and GMW. Without loss of generality we present it for the PMPC case.

A commitment scheme is a triple of algorithms *(Gen; Com; Verify)*. Algorithm Com enables one Party to hide

a secret

$$\mathbf{x} = (x_1, \ldots, x_n) \in \mathcal{Z}_2^n$$

by computing Com(**x**) on some random public key generated by Gen. The commitment scheme works in such a way that using the algorithm *Verify* the Party is then able to show $\mathbf{x} = (x_1, \ldots, x_n)$ to a verifier and prove that it was the committed value. This operation is called *opening* a commitment. A commitment is successfully opened when the verifier receives **x** from the Party and *Verify(Com(x); x)* returns *TRUE.*

The Pedersen commitment (see Torben Pryds Pedersen, "Non-interactive and information-theoretic secure verifable secret sharing", Joan Feigenbaum, editor, Advances in Cryptology, CRYPTO '91, pages 129-140, Springer Berlin, Heidelberg, 1992) is a well-known commitment scheme that enables one Party to generate a commit using the following equation:

$$\text{Com}(\mathbf{x}) = h^r \prod_{i=1}^{n} g_i^{x_i} \mod p$$

where

$$g = (g_1, \ldots, g_n) \in \mathcal{Z}_p^n$$

are generators from a cyclic group with prime order *p* and

$$r \in \mathcal{Z}_p^*$$

is a random value used to mask (i.e. hide) the secret value **x.**

Commitments may have an interesting property relevant to our context: They can be *perfectly hiding*. This means that for any commitment *Com(x)* of a secret value **x** in the input space there is an opening *o* such that *Verify(Com(x); o)* returns *TRUE.* In other words, it implies that no single piece of information from **x** can be extracted from *Com(x),* which in the information theoretical sense is indistinguishable from random noise. This means that the commits are even safe against adversaries with infinite computational power because they contain no information. This fact is crucial to the compliance with client banking secrecy and other regulations such as GDPR.

The Pedersen commitment is perfectly hiding. We describe now a system that provides verifiable audits using Pedersen commits. The system can be trivially extended to other commit schemas. The requirements for this system are two:

- Requirement 1: Each Party can prove to the auditor that they used certain inputs in the PMPC and that they properly followed the PMPC process.

- Requirement 2: The auditor can find out why a transaction was rejected or accepted.

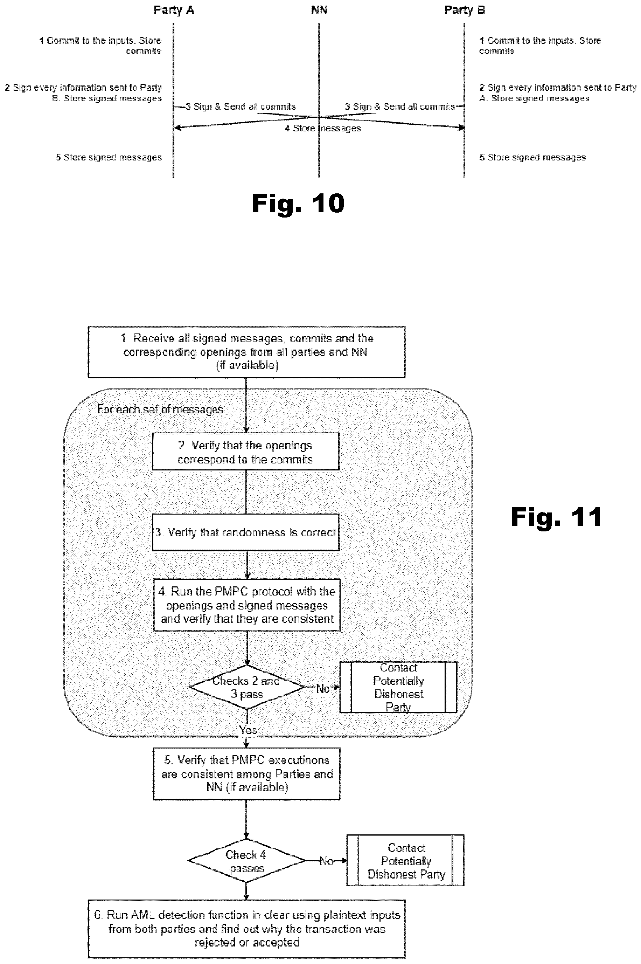

The verifiable audit process can be divided in two phases: information gathering and auditing. During the information gathering phase the parties follow the PMPC procedure committing to their inputs and signing the messages exchanged during the procedure. This is illustrated in Fig. 10.

During the information gathering phase the following steps take place:

1. Each Party stores commits to the inputs to the AML detection function including commits to the two parts the input information (**a** or **b**) is divided into: the random part ($\mathbf{L_a}$ for Party A and $\mathbf{R_b}$ for Party B) and the share ($\mathbf{R_a}$ for Party A and $\mathbf{L_b}$ for Party B).

2. Each Party signs and stores every message sent to the other party. This forms the basis for a non-repudiation mechanism. A private-public key schema such as RSA can be used for message signing purposes.

3. Each Party sends every signed message generated to the other party. Some messages contain commits. Specifically:

    a. During Phase 2 in Fig. 8 the following information is signed and sent when the random part is sent to the other party:

        i. A commit to the input (**a** or **b**),

        ii. The random parts ($\mathbf{L}_a$ for Party A and $\mathbf{R}_b$ for Party B),

        iii. A commit to the seed of the pseudo-random number generator used to generate each one of these parts

        iv. A commit to the shares ($\mathbf{R}_a$ for Party A and $\mathbf{L}_b$ for Party B)

    b. During Phases 3 and 4 in Fig. 8 every string of information sent to another Party is signed.

4. If there is a Network of Nodes (NN) between both parties, it stores every signed message. In addition to having the NN or alternatively, instead of having it, a distributed ledger technology such as a blockchain can be used by the parties and by the NN to store the signed messages in an immutable way.

5. Each Party also stores the signed messages received from the other party.

Fig. 11 illustrates the auditing phase of verifiable audits. During the auditing phase of the verifiable audit process the auditor performs a series of checks to verify that all parties have been honest and then it uses their plaintext inputs to compute the AML detection function and find out why the transaction was accepted or rejected. As seen in Fig. 11**Error! Reference source not found.:**

1. The auditor contacts each Party and receives the signed messages with commits and openings. If a NN or if a distributed ledger technology such as a blockchain is used, they can provide the signed messages as well, in which case the parties need only to provide the commit openings. Notice that every Party has stored the whole exchange of information, including sent and received messages.

2. For each set of commits and openings received from a Party the auditor checks that the openings correspond to the commits. With this the auditor is making sure that each commit is a commit to the corresponding opened value. The auditor also checks that all messages sent by a Party are correctly signed.

3. For each set of commits and openings received from a Party the auditor checks that the seed of the pseudo-random number generator was indeed used in order to generate randomness during the Setup Phase in Fig. 8.

4. Next, for each set of signed messages received from a Party the auditor uses the openings from both parties and runs the whole PMPC checking that all openings are consistent with what the PMPC produces. If an inconsistency is detected, the Party that owns the data set is contacted for further enquiry.

5. Once the PMPC execution history is consistent for each one of the Parties, the auditor checks whether they are all the same across parties. If they are not, it means that at least one Party has not provided the auditor with the correct set of sent messages. Conflicts are easy to resolve because the auditor can reproduce the *true* execution trace from the PMPC by gathering from each Party (A or B) the signed messages received from the other Party (B or A) containing the information sent during any given step of the execution. Any information provided by one Party deviating from that *true* execution trace is wrong.

6. Once the auditor has resolved all conflicts arising between the Parties, it uses the opening to the commits to the inputs from both parties in order to execute the AML detection function and find out why exactly it rejected or accepted the transaction. Notice that in this instance the AML detection function, which is known to the auditor, is directly executed without the help of MPC.

The following principles summarise the technique used by the verifiable audits:

- All information exchanged during the execution of the PMPC is signed.

- The inputs to the AML detection function, as well as any derived information required by the MPC is also signed and sent to the other Party.

- In order to prevent the process from leaking information, all information that is not one-time-padded is replaced by a commit with perfect hiding property.

These principles can be directly applied to all types of MPC, including Yao's garbled circuits and GMW MPC.

The verifiable audit process can be trivially extended to more than two parties. In the Information Gathering phase, every Party stores the signed messages sent to every other Party as well as the signed messages received from every other Party. In the Auditing phase the auditor performs the same sequence of steps, performing steps 2, 3, 4 on every Party.

The invention is not limited to the embodiments disclosed herein which can be varied and modified without departing from the scope of the claims.

## Claims

1. A computer-implemented method, carried out between a first party A and a second party B over a communications network, of calculating the result *r* of a Boolean function F having a first secret input *a* known to the first party A and a second secret input *b* known to the second party B, without either party sharing its secret input with the other party, the method comprising the steps of:

a) party A generating two data items $L_a$, $R_a$ wherein $L_a$ is random data and $R_a$ is computed according to the formula $R_a = a \oplus L_a$, and wherein *a* is derivable from $L_a$ and $R_a$ together according to the formula $a = L_a \oplus R_a$, and party B generating two data items $L_b$, $R_b$ wherein $R_b$ is random data and $L_b$ is computed according to the formula $L_b = b \oplus R_b$, and wherein *b* is derivable from $L_b$ and $R_b$ together according to the formula $b = R_b \oplus L_b$;

b) each party sharing its respective random data item $L_a$, $R_b$ with the other party over the network;

c) dividing said Boolean function F into separate subfunctions $SF_A$, $SF_B$, wherein subfunction $SF_A$ takes $L_a$, $L_b$, $R_a$, $R_b$ as inputs and outputs an intermediate result ra and wherein subfunction $SF_B$ takes $L_a$, $L_b$, $R_a$, $R_b$ as inputs and outputs an intermediate result $r_b$ and wherein the result *r* of Boolean function F is defined as r = $r_a \odot r_b$, where Q is an arbitrary logic gate;

d)

(i) party A computing all possible values of $r_a$, using $L_a$, $R_a$ and $R_b$, together with all possible values of $L_b$;

(ii) party B computing all possible values of $r_b$, using $L_a$, $L_b$ and $R_b$, together with all possible values of $R_a$;

e)

(i) party A sending to party B a first ordered data set of all possible values of $r_a$ one-time-pad encrypted with a generated random string $\sigma_a$ that is secret to party A, such that the first ordered data set includes the correct result $r_a$ encrypted as $s_a = \sigma_a \oplus r_a$, together with a plurality of meaningless values;

(ii) party B sending to party A a second ordered data set of all possible values of $r_b$ one-time-pad encrypted with a generated random string $\sigma_b$ that is secret to party B, such that the first ordered data set includes the correct result $r_b$ encrypted as $s_b = \sigma_b \oplus r_b$, together with a plurality of meaningless values;

f)

(i) party A selecting $s_b$ by using the real value of $R_a$ to identify the expected position in the second ordered data set of the correct encrypted value;

(ii) party B selecting $s_a$ by using the real value of $L_b$ to identify the expected position in the first ordered data set of the correct encrypted value;

g)

(i) party A one-time-pad encrypting $s_b$ with a generated random string $\mu_a$ that is secret to party A, resulting in a further encrypted data item $p_b = \mu_a \oplus s_b$, and sending $p_b$ to party B;

(ii) party B one-time-pad encrypting $s_a$ with a generated random string $\mu_b$ that is secret to party B, resulting in a further encrypted data item $p_a = \mu_b \oplus s_a$, and sending $p_a$ to party A;

h)

(i) party A determining from $s_b$, $p_a$, $\mu_a$ and $\sigma_a$ the result r of the function F; and
(ii) party B determining from $s_a$, $p_b$, $\mu_b$ and $\sigma_b$ the result r of the function F;

wherein step h) comprises:

- party A computing $u_a = p_a \odot s_b$, and sending $u_a$ to party B ;
- party B computing $u_b = p_b$ Q $s_a$, and sending $u_b$ to party A;
- party A computing $v_a = \mu_a \oplus u_b \oplus \sigma_a$, and sending $v_a$ to party B;
- party B computing $v_b = \mu_b \oplus u_a \oplus \sigma_b$ and sending $v_b$ to party A;
- party A computing the result $r = \sigma_a \oplus v_b$ and
- party B computing the result $r = \sigma_b \oplus v_a$.

2. A computer-implemented method according to any preceding claim, wherein in step d) party A computes all possible values of $r_a$ using all possible values of $L_b$ taken in an ordered sequence known to party B, and party B computes all possible values of $r_b$ using all possible values of $R_a$ taken in an ordered sequence known to party A, and wherein the ordered data sets sent in step e) preserve the sequence or are indexed to permit the receiving party to identify a value according to the ordered sequence employed for the computation.

3. A computer-implemented method according to any preceding claim, wherein step (c) of dividing said Boolean function F into separate subfunctions $SF_A$, $SF_B$ comprises:

- defining the function F as a Boolean circuit such that the result $r = S_1 \odot S_2 \odot \cdots O\ S_n$, where Q represents any logic gate function;
- implementing a desired computational split (k : n-k) between the parties such that party A will perform k/n of the computations and party B will perform (n-k)/n of the computations;
- defining subfunction $SF_A$ with result $r_a = S_1 \odot S_2 \odot \cdots \odot S_k$, and subfunction $SF_B$ with result $r_b = S_{k+1} \odot S_2 \odot \cdots \odot S_n$.

4. A computer-implemented method according to claim 3, wherein the Boolean circuit is defined such that $r = S_1 \odot S_2 \odot \cdots \odot S_n$ is defined in the form with the lowest number of levels, wherein a level comprises all the logical gates which can be computed from the available inputs at a given time.

5. A computer-implemented method according to any preceding claim, wherein said method is operated twice in respect of a transaction in which parties A and B are participants, with a first operation occurring in real time as the transaction is taking place and with a Boolean function $F_1$ which has a computational requirement sufficiently low as to permit completion within a typical transaction timescale, and a second operation taking place after the transaction, and optionally within a batched operation, and with a Boolean function $F_2$ which has a computational requirement higher than $F_1$.

6. A computer-implemented method according to any preceding claim, wherein each party generates a cryptographic commit to (i) its secret input **a** or **b**, and (ii) its data item $R_a$ or $L_b$ that is not shared with the other party.

7. A computer-implemented method according to claim 6, wherein when a random data item $L_a$ or $R_b$ is based on the output of a pseudo-random number generator, the party generating that random data item also generates a cryptographic commit to a seed used as input to the pseudo-random number generator.

8. A computer-implemented method according to claim 6 or claim 7, wherein each party signs and sends to the other party each of said commits it has generated.

9. A computer-implemented method according to any preceding claim, wherein each party signs and stores a copy of each message sent to the other party.

10. A computer-implemented method according to any preceding claim, wherein each party stores each signed message received from the other party.

11. A computer program comprising instructions which when executed by a computing device of a party participating in the method of any preceding claim, are effective to cause said device to implement the method steps of one of the parties A or B.

**Patentansprüche**

1.  Computerimplementiertes Verfahren, das zwischen einer ersten Partei A und einer zweiten Partei B über ein Kommunikationsnetz ausgeführt wird, um das Ergebnis *r* einer booleschen Funktion F mit einer ersten geheimen Eingabe *a*, die der ersten Partei A bekannt ist, und einer zweiten geheimen Eingabe *b*, die der zweiten Partei B bekannt ist, zu berechnen, ohne dass eine der Parteien ihre geheime Eingabe mit der anderen Partei teilt, wobei das Verfahren die folgenden Schritte umfasst:

    a) Partei A erzeugt zwei Datenelemente $L_a$, $R_a$, wobei $L_a$ Zufallsdaten sind und $R_a$ gemäß der Formel $R_a = a \oplus L_a$ berechnet wird und wobei *a* aus $L_a$ und $R_a$ zusammen gemäß der Formel $a = L_a \oplus R_a$ ableitbar ist, und Partei B erzeugt zwei Datenelemente $L_b$, $R_b$, wobei $R_b$ Zufallsdaten sind und $L_b$ gemäß der Formel $L_b = b \oplus R_b$ berechnet wird und wobei *b* aus $L_b$ und $R_b$ zusammen gemäß der Formel $b = R_b \oplus L_b$ ableitbar ist;
    b) jede Partei teilt ihr jeweiliges Zufallsdatenelement $L_a$, $R_b$ mit der anderen Partei über das Netz;
    c) Aufteilen der booleschen Funktion F in separate Unterfunktionen $SF_A$, $SF_B$, wobei die Unterfunktion $SF_A$ $L_a$, $L_b$, $R_a$, $R_b$ als Eingaben nimmt und ein Zwischenergebnis ra ausgibt und wobei die Unterfunktion $SF_B$ $L_a$, $L_b$, $R_a$, $R_b$ als Eingaben nimmt und ein Zwischenergebnis $r_b$ ausgibt und wobei das Ergebnis *r* der booleschen Funktion F als $r = r_a \odot r_b$ definiert ist, wobei O ein beliebiges Logikgatter ist;
    d)

    (i) Partei A berechnet alle möglichen Werte von $r_a$ unter Verwendung von $L_a$, $R_a$ und $R_b$ zusammen mit allen möglichen Werten von $L_b$;
    (ii) Partei B berechnet alle möglichen Werte von $r_b$ unter Verwendung von $L_a$, $L_b$ und $R_b$ zusammen mit allen möglichen Werten von $R_a$;

    e)

    (i) Partei A sendet an Partei B einen ersten geordneten Datensatz aller möglichen Werte von $r_a$, der mit einer generierten Zufallszeichenfolge $\sigma_a$ One-Time-Pad-verschlüsselt ist, die für Partei A geheim ist, sodass der erste geordnete Datensatz das korrekte Ergebnis $r_a$, das als $s_a = \sigma_a \oplus r_a$ verschlüsselt ist, zusammen mit einer Vielzahl von bedeutungslosen Werten beinhaltet;
    (ii) Partei B sendet an Partei A einen zweiten geordneten Datensatz aller möglichen Werte von $r_b$, der mit einer generierten Zufallszeichenfolge $\sigma_b$ One-Time-Pad-verschlüsselt ist, die für Partei B geheim ist, sodass der erste geordnete Datensatz das korrekte Ergebnis $r_b$, das als $s_b = \sigma_b \oplus r_b$ verschlüsselt ist, zusammen mit einer Vielzahl von bedeutungslosen Werten beinhaltet;

    f)

    (i) Partei A wählt $s_b$ unter Verwendung des realen Wertes von $R_a$ aus, um die erwartete Position des korrekten verschlüsselten Wertes im zweiten geordneten Datensatz zu identifizieren;
    (ii) Partei B wählt $s_a$ unter Verwendung des realen Wertes von $L_b$ aus, um die erwartete Position des korrekten verschlüsselten Wertes im ersten geordneten Datensatz zu identifizieren;

    g)

    (i) Partei A One-Time-Pad-verschlüsselt $s_b$ mit einer erzeugten Zufallszeichenfolge $\mu_a$, die für Partei A geheim ist, was zu einem weiteren verschlüsselten Datenelement $p_b = \mu_a s_b$ führt, und sendet $p_b$ an Partei B;
    (ii) Partei B One-Time-Pad-verschlüsselt $s_a$ mit einer erzeugten Zufallszeichenfolge $\mu_b$, die für Partei B geheim ist, was zu einem weiteren verschlüsselten Datenelement $p_a = \mu_b s_a$ führt, und sendet $p_a$ an Partei A;

    h)

    (i) Partei A bestimmt aus $s_b$, $p_a$, $\mu_a$ und $\sigma_a$ das Ergebnis r der Funktion F; und
    (ii) Partei B bestimmt aus $s_a$, $p_b$, $u_b$ und $\sigma_b$ das Ergebnis r der Funktion F;

wobei Schritt h) umfasst:

- Partei A berechnet $u_a = p_a \odot s_b$ und sendet $u_a$ an Partei B;
- Partei B berechnet ub = Pb $\odot$ sa und sendet ub an Partei A;
- Partei A berechnet va = $\mu$a $\oplus$ ub $\oplus$ $\sigma$aund sendet va an Partei B;
- Partei B berechnet vb = $\mu$b $\oplus$ ua $\oplus$ $\sigma$b und sendet vb an Partei A;
- Partei A berechnet das Ergebnis r = $\sigma_a$ $\oplus$ vb und
- Partei B berechnet das Ergebnis r = $\sigma$b $\oplus$ va.

2. Computerimplementiertes Verfahren nach einem der vorhergehenden Ansprüche, wobei in Schritt d) Partei A alle möglichen Werte von $r_a$ unter Verwendung aller möglichen Werte von $L_b$ berechnet, die in einer geordneten Reihenfolge genommen werden, die Partei B bekannt ist, und Partei B alle möglichen Werte von $r_b$ unter Verwendung aller möglichen Werte von $R_a$ berechnet, die in einer geordneten Reihenfolge genommen werden, die Partei A bekannt ist, und wobei die geordneten Datensätze, die in Schritt e) gesendet werden, die Reihenfolge beibehalten oder indiziert sind, um es der empfangenden Partei zu ermöglichen, einen Wert gemäß der geordneten Reihenfolge zu identifizieren, die für die Berechnung verwendet wird.

3. Computerimplementiertes Verfahren nach einem der vorhergehenden Ansprüche, wobei Schritt (c) des Aufteilens der booleschen Funktion F in separate Unterfunktionen $SF_A$, $SF_B$ Folgendes umfasst:

- Definieren der Funktion F als boolesche Schaltung, sodass das Ergebnis r = $S_1 \odot S_2 \odot \cdots \odot S_n$ ist, wobei O eine beliebige Logikgatterfunktion darstellt;
- Implementieren einer gewünschten Rechenaufteilung (k : n-k) zwischen den Parteien, sodass Partei A k/n der Berechnungen durchführt und Partei B (n-k)/n der Berechnungen durchführt;
- Definieren der Unterfunktion $SF_A$ mit dem Ergebnis $r_a = S_1 \odot S_2 \odot \cdots \odot S_k$ und der Unterfunktion $SF_B$ mit dem Ergebnis $r_b = S_{k+1} \odot S_2 \odot \cdots \odot S_n$.

4. Computerimplementiertes Verfahren nach Anspruch 3, wobei die boolesche Schaltung so definiert ist, dass r = $S_1$ O $S_2 \odot \cdots \odot S_n$ in der Form mit der niedrigsten Anzahl von Ebenen definiert ist, wobei eine Ebene alle logischen Gatter umfasst, die aus den zu einem bestimmten Zeitpunkt verfügbaren Eingaben berechnet werden können.

5. Computerimplementiertes Verfahren nach einem der vorhergehenden Ansprüche, wobei das Verfahren in Bezug auf eine Transaktion, an der die Parteien A und B beteiligt sind, zweimal ausgeführt wird, wobei eine erste Operation in Echtzeit erfolgt, während die Transaktion stattfindet, und mit einer booleschen Funktion $F_1$, die eine hinreichend niedrige Rechenanforderung aufweist, um eine Fertigstellung innerhalb eines typischen Transaktionszeitrahmens zu ermöglichen, und eine zweite Operation nach der Transaktion und optional innerhalb einer Stapelverarbeitung stattfindet, und mit einer booleschen Funktion $F_2$, die eine höhere Rechenanforderung als $F_1$ aufweist.

6. Computerimplementiertes Verfahren nach einem der vorhergehenden Ansprüche, wobei jede Partei eine kryptografische Festlegung für (i) ihre geheime Eingabe **a** oder **b** und (ii) ihr Datenelement $R_a$ oder $L_b$ erzeugt, das nicht mit der anderen Partei geteilt wird.

7. Computerimplementiertes Verfahren nach Anspruch 6, wobei, wenn ein Zufallsdatenelement $L_a$ oder $R_b$ auf der Ausgabe eines Pseudo-Zufallszahlengenerators basiert, die Partei, die dieses Zufallsdatenelement erzeugt, auch eine kryptographische Festlegung für einen Seed erzeugt, der als Eingabe für den Pseudo-Zufallszahlengenerator verwendet wird.

8. Computerimplementiertes Verfahren nach Anspruch 6 oder Anspruch 7, wobei jede Partei jede von ihr erzeugte Festlegung signiert und an die andere Partei sendet.

9. Computerimplementiertes Verfahren nach einem der vorhergehenden Ansprüche, wobei jede Partei eine Kopie jeder an die andere Partei gesendeten Nachricht signiert und speichert.

10. Computerimplementiertes Verfahren nach einem der vorhergehenden Ansprüche, wobei jede Partei jede von der anderen Partei empfangene signierte Nachricht speichert.

11. Computerprogramm, das Anweisungen umfasst, die, wenn sie von einer Computervorrichtung einer an dem Verfahren nach einem der vorhergehenden Ansprüche beteiligten Partei ausgeführt werden, bewirken, dass die Vorrichtung die Verfahrensschritte einer der Parteien A oder B ausführt.

**Revendications**

1. Procédé mis en oeuvre par ordinateur réalisé entre une première partie A et une seconde partie B sur un réseau de communication, de calcul du résultat $r$ d'une fonction booléenne F ayant une première entrée secrète $a$ connue de la première partie A et une seconde entrée secrète $b$ connue de la seconde partie B, sans qu'aucune des parties ne partage son entrée secrète avec l'autre partie, le procédé comprenant les étapes :

a) de génération par la partie A de deux éléments de données $L_a$, $R_a$ dans lequel $L_a$ est une donnée aléatoire et $R_a$ est calculé selon la formule $R_a = a \oplus L_a$, et dans lequel $a$ peut être dérivé de $L_a$ et $R_a$ ensemble selon la formule $a = L_a \oplus R_a$, de génération par la partie B de deux éléments de données $L_b$, $R_b$ dans lequel $R_b$ est une donnée aléatoire et $L_b$ est calculé selon la formule $L_b = b \oplus R_b$, et dans lequel $b$ peut être dérivé de $L_b$ et $R_b$ ensemble selon la formule $b = R_b \oplus L_b$ ;

b) chaque partie partageant son élément de données aléatoire respectif $L_a$, $R_b$ avec l'autre partie sur le réseau ;

c) de division de ladite fonction booléenne F en sous-fonctions séparées $SF_A$, $SF_B$, dans lequel la sous-fonction $SF_A$ prend $L_a$, $L_b$, $R_a$, $R_b$ comme entrées et émet un résultat intermédiaire ra et dans lequel la sous-fonction $SF_B$ prend $L_a$, $L_b$, $R_a$, $R_b$ comme entrées et émet un résultat intermédiaire $r_b$ et dans lequel le résultat $r$ de la fonction booléenne F est défini comme $r = r_a$ O $r_b$, où O est une porte logique arbitraire ;

d)

(i) de calcul par la partie A de toutes les valeurs possibles de $r_a$, à l'aide de $L_a$, $R_a$ et $R_b$, ainsi que toutes les valeurs possibles de $L_b$ ;

(ii) de calcul par la partie B de toutes les valeurs possibles de $r_b$, à l'aide de $L_a$, $L_b$ et $R_b$, ainsi que toutes les valeurs possibles de $R_a$ ;

e)

(i) d'envoi par la partie A à la partie B d'un premier ensemble de données ordonnées de toutes les valeurs possibles de $r_a$ chiffrées selon la méthode du masque jetable avec une chaîne aléatoire générée $\sigma_a$ qui est secrète pour la partie A, de sorte que le premier ensemble de données ordonnées comporte le résultat correct $r_a$ chiffré sous la forme $s_a = \sigma_a \oplus r_a$, ainsi qu'une pluralité de valeurs sans signification ;

(ii) d'envoi par la partie B à la partie A d'un second ensemble de données ordonnées de toutes les valeurs possibles de $r_b$ chiffrées selon la méthode du masque jetable avec une chaîne aléatoire générée $\sigma_b$ qui est secrète pour la partie B, de sorte que le premier ensemble de données ordonnées comporte le résultat correct $r_b$ chiffré sous la forme $s_b = \sigma_b \oplus r_b$, ainsi qu'une pluralité de valeurs sans signification ;

f)

(i) de sélection par la partie A de $s_b$ à l'aide de la valeur réelle de $R_a$ pour identifier la position attendue dans le second ensemble de données ordonnées de la valeur chiffrée correcte ;

(ii) de sélection par la partie B de $s_a$ à l'aide de la valeur réelle de $L_b$ pour identifier la position attendue dans le premier ensemble de données ordonnées de la valeur chiffrée correcte ;

g)

(i) de chiffrement selon la méthode du masque jetable par la partie A de $s_b$ avec une chaîne aléatoire générée $\mu_a$ qui est secrète pour la partie A, résultant en un autre élément de données chiffré $p_b = \mu_a \oplus s_b$, et envoyant $p_b$ à la partie B ;

(ii) de chiffrement selon la méthode du masque jetable par la partie B de $s_a$ avec une chaîne aléatoire générée $\mu_b$ qui est secrète pour la partie B, résultant en un autre élément de données chiffré $p_a = \mu_b \oplus s_a$, et envoyant $p_a$ à la partie A ;

h)

(i) de détermination par la partie A à partir de $s_b$, $p_a$, $\mu_a$ et $\sigma_a$ du résultat $r$ de la fonction F ; et

(ii) de détermination par la partie B à partir de $s_a$, $p_b$, $\mu_b$ et $\sigma_b$ du résultat $r$ de la fonction F ;

dans lequel l'étape h) comprend :

- la partie A calculant $u_a = p_a \odot s_b$, et envoyant $u_a$ à la partie B ;
- la partie B calculant $u_b = P_b \odot s_a$, et envoyant $u_b$ à la partie A ;
- la partie A calculant $v_a = \mu_a \oplus u_b \oplus \sigma_a$, et envoyant $v_a$ à la partie B ;
- la partie B calculant $v_b = \mu_b \oplus u_a \oplus \sigma_b$ et envoyant $v_b$ à la partie A ;
- la partie A calculant le résultat $r = \sigma_a \oplus v_b$ et
- la partie B calculant le résultat $r = \sigma_b \oplus v_a$.

2. Procédé mis en oeuvre par ordinateur selon une quelconque revendication précédente, dans lequel à l'étape d) la partie A calcule toutes les valeurs possibles de $r_a$ à l'aide de toutes les valeurs possibles de $L_b$ prises dans une séquence ordonnée connue de la partie B, et la partie B calcule toutes les valeurs possibles de $r_b$ à l'aide de toutes les valeurs possibles de $R_a$ prises dans une séquence ordonnée connue de la partie A, et dans lequel les ensembles de données ordonnées envoyés à l'étape e) préservent la séquence ou sont indexés pour permettre à la partie réceptrice d'identifier une valeur selon la séquence ordonnée employée pour le calcul.

3. Procédé mis en oeuvre par ordinateur selon une quelconque revendication précédente, dans lequel l'étape (c) de division de ladite fonction booléenne F en sous-fonctions séparées $SF_A$, $SF_B$ comprend :

- la définition de la fonction F comme un circuit booléen de sorte que le résultat $r = S_1 \odot S_2 \odot \cdots \odot S_n$, où $\odot$ représente n'importe quelle fonction de porte logique ;
- la mise en oeuvre d'une répartition de calcul souhaitée (k : nk) entre les parties de sorte que la partie A effectuera k/n des calculs et la partie B effectuera (nk)/n des calculs ;
- la définition de la sous-fonction $SF_A$ avec le résultat $r_a = S_1 \odot S_2 \odot \cdots \odot S_k$, et de la sous-fonction $SF_B$ avec le résultat $r_b = S_{k+1} \odot S_2 \odot \cdots \odot S_n$.

4. Procédé mis en oeuvre par ordinateur selon la revendication 3, dans lequel le circuit booléen est défini de sorte que $r = S_1 \odot S_2 \odot \cdots \odot S_n$ est défini sous la forme avec le plus petit nombre de niveaux, dans lequel un niveau comprend toutes les portes logiques qui peuvent être calculées à partir des entrées disponibles à un instant donné.

5. Procédé mis en oeuvre par ordinateur selon une quelconque revendication précédente, dans lequel ledit procédé est exécuté deux fois pour une transaction à laquelle les parties A et B sont des participants, une première opération se produisant en temps réel au fur et à mesure que la transaction se déroule et avec une fonction booléenne $F_1$ qui a une exigence de calcul suffisamment faible pour permettre l'achèvement dans une échelle de temps de transaction typique, et une seconde opération ayant lieu après la transaction, et éventuellement dans une opération par lots, et avec une fonction booléenne $F_2$ qui a une exigence de calcul supérieure à $F_1$.

6. Procédé mis en oeuvre par ordinateur selon une quelconque revendication précédente, dans lequel chaque partie génère un engagement cryptographique cryptographique sur (i) son entrée secrète **a** ou **b,** et (ii) son élément de données $R_a$ ou $L_b$ qui n'est pas partagé avec l'autre partie.

7. Procédé mis en oeuvre par ordinateur selon la revendication 6, dans lequel lorsqu'un élément de données aléatoire $L_a$ ou $R_b$ est basé sur la sortie d'un générateur de nombres pseudo-aléatoires, la partie générant cet élément de données aléatoire génère également un engagement cryptographique vers un source utilisée comme entrée du générateur de nombres pseudo-aléatoires.

8. Procédé mis en oeuvre par ordinateur selon la revendication 6 ou la revendication 7, dans lequel chaque partie signe et envoie à l'autre partie chacun desdits engagements qu'elle a générés.

9. Procédé mis en oeuvre par ordinateur selon une quelconque revendication précédente, dans lequel chaque partie signe et stocke une copie de chaque message envoyé à l'autre partie.

10. Procédé mis en oeuvre par ordinateur selon une quelconque revendication précédente, dans lequel chaque partie stocke chaque message signé reçu de l'autre partie.

11. Programme informatique comprenant des instructions qui, lorsqu'elles sont exécutées par un dispositif informatique d'une partie participant au procédé selon une quelconque revendication précédente, sont efficaces pour amener ledit dispositif à mettre en oeuvre les étapes de procédé de l'une des parties A ou B.

**Fig. 1**

**Fig. 2**

Network of Nodes

Party A

PMPC

RASM ← PSM

Risk Assessment Software Module

Party Software Module

PMPC

PSM ← RASM

Party Software Module

Risk Assessment Software Module

Party B

Distributed Ledger

## Fig. 3

Wallet Company A

Customer A

Transaction

Public data

Wallet Company B

Customer B

Enhanced AML Detection Process

Telco

Bank

Utility

Government

Credit Reporting Agency

## Fig. 4

**Fig. 5**

**Fig. 6**

Party A doesn't know what $L_{b_1}$ is, so it will test all possible values

Party B doesn't know what $R_{a_2}$ is, so it will test all possible values

**Fig. 7**

Input: AML detection function

1. Express AML detection function as a boolean circuit r

2. Express boolean circuit r using Disjunctive Normal Form (DNF)

2. Express boolean circuit r using Alternative form

2. Express boolean circuit r using Conjuctive Normal Form (CNF)

$r = S_1 \vee S_2 \vee \cdots \vee S_n$

$r = S_1 \odot S_2 \odot \cdots \odot S_n$

$r = S_1 \wedge S_2 \wedge \cdots \wedge S_n$

3. Select form with lowest number of levels

4. Group the first half of the terms in r and call it $r_a$. Group the second half and call it $r_b$.

5. Party A computes $r_a$ and Party B computes $r_b$, where $r = r_a \odot r_b$

**Fig. 9**

**Fig. 8**

**Party A**          **NN**          **Party B**

1 Commit to the inputs. Store commits

2 Sign every information sent to Party B. Store signed messages

—3 Sign & Send all commits          3 Sign & Send all commits—

4 Store messages

5 Store signed messages

1 Commit to the inputs. Store commits

2 Sign every information sent to Party A. Store signed messages

5 Store signed messages

# Fig. 10

1. Receive all signed messages, commits and the corresponding openings from all parties and NN (if available)

For each set of messages

2. Verify that the openings correspond to the commits

3. Verify that randomness is correct

4. Run the PMPC protocol with the openings and signed messages and verify that they are consistent

Checks 2 and 3 pass →No→ Contact Potentially Dishonest Party

Yes

5. Verify that PMPC executinons are consistent among Parties and NN (if available)

Check 4 passes →No→ Contact Potentially Dishonest Party

6. Run AML detection function in clear using plaintext inputs from both parties and find out why the transaction was rejected or accepted

# Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013085916 A1
- US 2009177591 A1
- US 2015341326 A1

**Non-patent literature cited in the description**

- **P. BALBONI ; M. MACENAITE.** Privacy by design and anonymisation techniques in action: Case study of Ma3tch technology. *Computer Law & Security Review,* 2013, vol. 29 (4), ISSN 0267-3649, 330-340, https://doi.org/10.1016/j.clsr.2013.05.005
- **SEUNG GEOL CHOI ; KYUNG-WOOK HWANG ; JONATHAN KATZ ; TAL MALKIN ; DAN RUBENSTEIN.** Secure Multi-Party Computation of Boolean Circuits with Applications to Privacy in On-Line Marketplaces. *IACR Cryptology ePrint Archive,* 2011
- Non-interactive and information-theoretic secure verifable secret sharing. **TORBEN PRYDS PEDERSEN.** Advances in Cryptology, CRYPTO '91. Springer, 1992, 129-140